# EUROPÄISCHE PATENTSCHRIFT

(11) **EP 1 049 881 B1**
(45) Veröffentlichungstag und Bekanntmachung des Hinweises auf die Patenterteilung: **06.08.2003**
(21) Anmeldenummer: 99900046.6
(22) Anmeldetag: 13.01.1999
(51) Int. Cl.: F16D 3/32

(54) **DOPPELGELENK FÜR LENKWELLEN IN KRAFTFAHRZEUGEN**
DOUBLE JOINT FOR STEERING AXLES IN AUTOMOBILES
JOINT DE CARDAN DOUBLE POUR ARBRES DE DIRECTION DANS DES VEHICULES AUTOMOBILES

(30) Priorität: 19.01.1998 CH 10898
(43) Veröffentlichungstag der Anmeldung: 08.11.2000
(73) Patentinhaber: ThyssenKrupp Presta AG, 9492 Eschen (LI)
(72) Erfinder: LUTZ, Christian, A-6714 Nüziders (AT)
(74) Vertreter: Wegmann, Urs
(86) Internationale Anmeldenummer: CH9900013
(87) Internationale Veröffentlichungsnummer: WO99036708

(56) Entgegenhaltungen:
- WO-A-95/12073
- DE-C- 3 921 242
- FR-A- 2 730 774
- GB-A- 913 365
- GB-A- 2 017 256
- US-A- 2 953 001
- US-A- 3 429 144
- US-A- 3 835 667

## Beschreibung

Die Erfindung betrifft ein Lenkwellendoppelgelenk für Kraftfahrzeuge nach dem Oberbegriff des Patentanspruches 1.

Eine bekannte Doppelgelenkanordnung ist beispielsweise das Doppelkreuzgelenk mit zwischen den beiden Gelenkkreuzen angeordnetem Kugelgelenk. Bei bekannten Anordnungen von Doppelkreuzgelenken sind jeweils zwei Gelenkkreuze um die eine Gelenkkreuzachse beweglich mit je einer Gabel an den beiden Wellenenden und um die andere Gelenkachse beweglich an einem Verbindungsgehäuse verbünden. Die Mittenzentrierung erfolgt durch eine Gelenkverbindung beider Wellenenden innerhalb des Verbindungsgehäuses aus einer metallischen Gelenkkugel an dem einen Wellenende und einem zylindrischen, ebenfalls metallischen Aufnahme an dem anderen Wellenende, in welches die Gelenkkugel eingreift. Das Verbindungsgehäuse bildet im Innern einen Hohlraum aus, der ein Freiraum für die Bewegung der zentrierenden Gelenkverbindung schafft und in seiner Grösse auf den maximalen Winkelausschlag der beiden Wellenenden gegenüber der gestreckten Achse abgestimmt ist. Die Enden bzw. die Zapfen der beiden Gelenkkreuze sind für gute Leichtgängigkeit entsprechend gelagert, beispielsweise mit Wälzlagern, welche in Bohrungen der Gabelarme bzw. im Verbindungsgehäuse angeordnet sind. Die Kreuzgelenklagerung mit ihren acht Lagerstellen, sowie die zentrale Kugellagerung erfordert hohe Präzision, um Leichtgängigkeit des Doppelkreuzgelenkes gewährleisten zu können. Ein leichter Versatz der beiden Wellenachsen innerhalb der Kippebene kann beispielsweise zu Verklemmungen in bestimmten Positionen führen, was die Leichtgängigkeit stark beeinträchtigen kann. Ausserdem führt dies auch zu unerwünschten Abnutzungserscheinungen. Um solche Nachteile zu begrenzen, müssen die Lagerungen entsprechend präzise ausgeführt werden, was bei der Herstellung hohe Kosten verursacht.

Um einen Ausgleich von Toleranzen zu schaffen wurde auch versucht, wie in der FR-A-2 730 774 dargestellt, die Gelenkkugel des einen Wellenendes in der Kugelaufnahme des anderen Wellenendes um ihren Mittelpunkt drehbar und in Richtung der Wellenachse des anderen Wellenendes gleit- beweglich zu lagern. Durch eine Kunststoffhülse mit nach innen ragenden elastischen Rippen ist die Kugel ausserdem in der Aufnahme federnd gelagert, was einen gewissen Ausgleich von Fertigungstoleranzen ermöglichen soll.

Eine weitere Möglichkeit der Lagerung einer Kugel in einem Lenkwellen - Doppelgelenk ist in der GB-A-913 365 dargestellt. Hierbei ist eine Hülse, welche die Kugel umfasst, lediglich axial verschieblich in der Aufnahme gehalten.

Eine weitere bekannte Möglichkeit, das Problem zu verringern, besteht darin, im Bereich der Zapfen der Kreuzgelenklager gummielastisches Material als Einlage so vorzusehen, dass sich die Lager über die so erreichte, leichte Federbeweglichkeit in Bezug auf Fertigungstoleranzen einstellen können und gleichzeitig eine schwingungsdämpfende Wirkung haben. Eine gummielastische Lagerung von zwei bis zu allen acht Kreuzgelenkzapfen ist einschränkend wenn kleine Baugrössen gefordert sind und ist in der Realisation aufwendig und teuer.

Es ist Aufgabe der vorliegenden Erfindung, ein Lenkwellendoppelgelenk obgenannter Art vorzuschlagen, bei welchem die Nachteile des Standes der Technik behoben werden. Insbesondere besteht die Aufgabe darin, ein Doppelgelenk zu realisieren, welches neben der Leichtgängigkeit einfach zu montieren ist, kostengünstig herstellbär und unempfindlich auf Fertigungstoleranzen ist.

Die Aufgabe wird erfindungsgemäss durch die Anordnung nach dem kennzeichnenden Teil des Anspruchs 1 und des Anspruchs 16 gelöst. Die abhängigen Ansprüche definieren weitere vorteilhafte Ausführungsformen.

Erfindungsgemäss wird die Aufnahme für die Kugel, welche die beiden Wellenenden beweglich verbinden, federnd bzw. federelastisch taumelnd ausgebildet. Dies ist möglich mit geringster Ermüdung und einstellbarer Federkraft. Dies erlaubt eine sehr kostengünstige Ausführung, da der Toleranzausgleich durch die federnde Lagerung nur einmal ausgeführt werden muss.

Die Kugel auf dem einen Wellenende wird vorzugsweise in der Aufnahme des anderen Wellenendes so gelagert, dass die Aufnahme für die Kugel als Gleitbüchse ausgebildet ist und diese Büchse die Kugel umschliesst. Die Büchse ihrerseits wird federnd gelagert, indem die Büchse beziehungsweise die Aufnahme welche eine Gleitbüchse enthalten kann über federnde Mittel, wie Federn, an dem einen Wellenende, beziehungsweise an der Gabel, so befestigt ist, dass die Aufnahme bei zu starken radialen Kräften durch die Kugel in einer Art Taumelbewegung weggedrückt werden kann, bis der Toleranzausgleich erfolgt ist.

Die Gleitbüchse, in welcher die Kugel gleitet und dreht, ist aus einem Gleitlagermaterial gefertigt, wobei eine solche Büchse auch eine Gleitbeschichtung aufweisen kann. Besonders geeignet sind aber, insbesondere geschlitzte, Büchsen aus einem Sintermetall auf einer Traghülse.

Die Büchse selbst sollte so ausgeführt werden, dass sie zusammen mit der Kugel eine spielfreie Lagerung ausbildet. Dies wird dadurch erreicht, dass die Gleitbüchse mit einer gewissen Vorspannung und somit spielfrei sich an der Kugel federelastisch anlegt. Eine Schlitzung der Aussenwand der Gleitbüchse ermöglicht dies so, dass die Gleitbüchse in radialer Richtung atmen kann. Auf diese Weise werden sowohl radiale Toleranzen beispielsweise des Kugeldurchmessers aufgenommen und über die elastische Lagerung der Büchse Toleranzabweichungen der Wellenachsen ausgeglichen.

Eine weitere vorteilhafte Ausführungsform besteht darin, dass eine Kunsstofführung auf der Gelenkkugel aufgebracht ist, wobei dann die Kunststofführung in der Gleitbüchse oder der zylindrischen Aufnahme selbst gleitet. In diesem Fall ist es möglich die Büchse oder die Aufnahme auch ohne spezielles Lagermaterial herzustellen. Die Lagerbüchse kann sogar weggelassen werden und das, sich an der Kugel haltende, Kunststoffteil gleitet dann unmittelbar geführt in der Aufnahmehülse, die taumelbeweglich, federnd gelagert ist.

Bei Doppelkreuzgelenkanordnungen insbesondere vorerwähnter Art ist es ausserdem wichtig, dass bei der Montage des Gelenkes eine Führung vorhanden ist, welche das Kugelgelenk auf gezielte Art zusammenführt und ausserdem dass bei Extremendpositionen des Gelenkes, welche nicht dem normalen Betriebsfall entsprechen, aus Sicherheitsgründen ein definierter Anschlag vorgesehen ist. Durch entsprechende Ausbildung des Verbindungsgehäuses im Innenbereich mit entsprechenden umlaufenden Anschlagflächen kann dies definiert werden. Es ist darauf zu achten, dass insbesondere die Taumelaufnahme, welche gegebenenfalls die Büchse trägt, in Extremposition zuerst am Anschlag anliegt und darauf folgend erst die Gelenkkugel an einer zweiten Anschlagfläche aufliegt. Damit wird, vor allem in nicht eingebautem Zustand, gewährleistet, dass der Anschlag in Extremposition abgedämpft wird. Diese Art der Anschlagsdefinition ist für die vorliegende erfindungsgemässe, federelastische Kugelgelenkslagerung besonders geeignet, kann aber auch vorteilhafterweise bei anderen Doppelkreuzgelenken ohne federelastische Kugelgelenklagerung eingesetzt werden.

Für Doppelgelenkanordnungen eignen sich auch andere Ausführungen als Kreuzgelenke. Wenn beispielsweise besonders hohe Leichtgängigkeit und gleichförmige Bewegungen gefordert werden, wird das Doppelgelenke vorzugsweise mit je einem Universalgelenk, auch homokinetisches Gelenk genannt, insbesondere der Bauart Gleichlauf-Festgelenk, realisiert. Zwischen den beiden Gelenken, welche mit einem Gehäuse verbunden sind, ist dann wiederum das Kugelgelenk mit der federelastischen Lagerung angeordnet, wodurch die Wellenenden über die beiden Gelenke Knickbeweglich gelagert sind. Gleichlauf-Festgelenke werden beispielsweise als Löbro-Gelenke von der Firma Löhr & Bromkamp GmbH, DE 6050 Offenbach, hergestellt.

Die Erfindung wird nun nachfolgend anhand von Ausführungsbeispielen mit schematischen Figuren näher erläutert. Es zeigen:
- Fig. 1: schematisch und im Schnitt eine erfindungsgemässe Ausführung eines Lenkwellendoppelkreuzgelenkes.
- Fig. 2: schematisch und im Schnitt eine weitere erfindungsgemässe Ausführung eines Lenkwellendoppelkreuzgelenkes um 90° versetzt und mit Anschlagmittel zur Begrenzung der Auslenkung.
- Fig. 3: schematisch und im Schnitt, vergrössert gemäss Figur 2 eine Variante der federnden Lageranordnung der Taumelhülse mit Gleitbüchse.
- Fig. 4: schematisch und im Schnitt eine weitere Variante der federnden Lageranordnung mit gebördelter Taumelhülse.
- Fig. 5: schematisch und im Schnitt eine weitere Variante der federnden Lageranordnung mit spielausgleichendem Federfinger.
- Fig. 5a: schematisch und im Querschnitt ein Federfinger gemäss Fig.5.
- Fig. 6: schematisch und im Schnitt eine spielausgleichende weitere Variante, zusätzlich mit im Durchmesser zustellender Kunststoffhülse zwischen der Taumelaufnahme und der Gleitbüchse als Toleranz- und Verschleissausgleich.
- Fig. 7: schematisch und im Schnitt eine weitere Variante mit Kunststoffgleitführung gehalten an Kugel und der als Gleitbüchse ausgebildeten Taumelaufnahme.
- Fig. 8: schematisch und im Schnitt eine Ausführungsform entsprechend Figur 7 mit Ausbildung der Taumelbüchse als auf Spiel null zustellende Einspannfeder für die Kunststoffgleitführung.
- Fig. 8a: schematisch und im Querschnitt die Taumelbüchse gemäss Fig.8.
- Fig. 9a: schematisch und im Querschnitt eine weitere Ausführungsform einer Kunststoffgleitführung mit Kunststoffeder, in nicht eingebautem Zustand.
- Fig. 9b: schematisch und im Längsschnitt die Kunststoffgleitführung mit Kunsstoffeder entsprechend Figur 9a.
- Fig. 10a: schematisch und im Querschnitt eine Kunststoffgleitführung nach Figur 9, in eingebautem Zustand.
- Fig. 10b: schematisch und im Längsschnitt eine Kunststoffgleitführung nach Figur 9, ebenfalls in eingebautem Zustand.

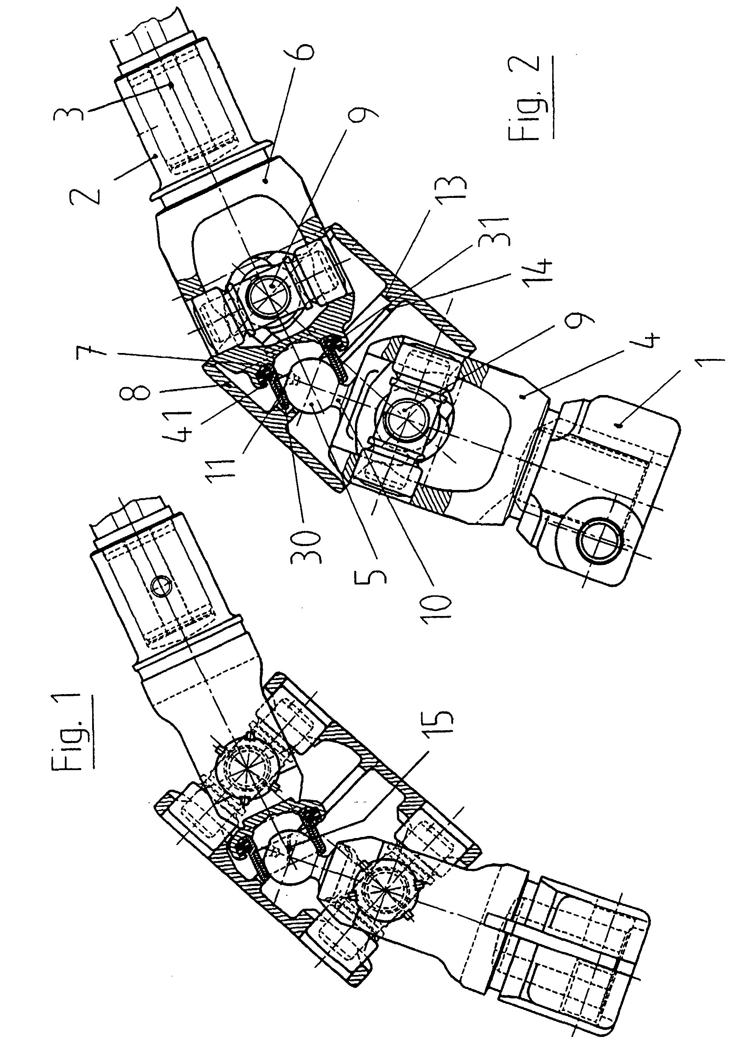

In den Figuren 1 und 2 ist ein erfindungsgemässes Lenkwellendoppelkreuzgelenk im Querschnitt dargestellt. Das Gelenk besteht aus einem Verbindungsgehäuse 8 bzw einer Rohrdoppelgabel 8, in welchem beweglich gelagert zwei Gelenkkreuze 9 angeordnet sind. Die Wellenenden 2 und 3 sind über die Gabeln 4 und 6, welche an den Gelenkkreuzen 9 gelagert sind, über den Kugelhals 10 und die Kugel 5 mit der Aufnahme 7 gelenkbeweglich verbunden. Faltenbälge können das Gelenk vor Verunreinigungen schützen.

Die Aufnahme 7 ist gleitbüchsenförmig ausgebildet bzw. nimmt eine zylinderförmige Gleitbüchse auf, welche entweder mit einem Gleitmaterial, beispielsweise einem Gleitmetall, beschichtet ist oder aus einem Gleitmaterial wie vorzugsweise einem Sintermetall mit Traghülse besteht. Um einen entsprechend geeigneten Toleranzausgleich möglich zu machen, ist Aufnahme 7 federelastisch an der Gabel 6 gelagert, so dass sie bei einer bestimmten Querkraft taumelartig gegenüber der Wellenachse 3 abgelenkt werden kann. Die Vorspannung der Tellerfeder 31 wird so gewählt, dass eine genügend grosse Rückstellkraft vorhanden ist und der Toleranzausgleich gewährleistet ist bei hoher Leichtgängigkeit.

In Figur 2 ist ein um 90° gedrehtes Gelenk im Querschnitt dargestellt, in welchem die Gelenkgabeln 4 und 6 an den Wellenenden 1 und 2 dargestellt sind. Diese sind wie erwähnt in den Kreuzgelenken 9 am Gehäuse 8, welches beispielsweise rohrförmig ausgebildet sein kann, beweglich gelagert. Im mittleren Innenbereich des Gehäuses 8 sind die Endanschläge 13 und 14 dargestellt, welche als ringförmige Erhebungen ausgebildet sind und bis zur Montage des Gelenkes hilfreich sind und gleichzeitig als Sicherheitsanschläge in extremen Endpositionen des Gelenkes dienen. Die Anschlagflächen 13 und 14 sind so ausgebildet, dass die Aufnahme 7 in Extremposition gegenüber der Kugel 5 zuerst bewegungsbegrenzend am Anschlag 13 kontaktiert.

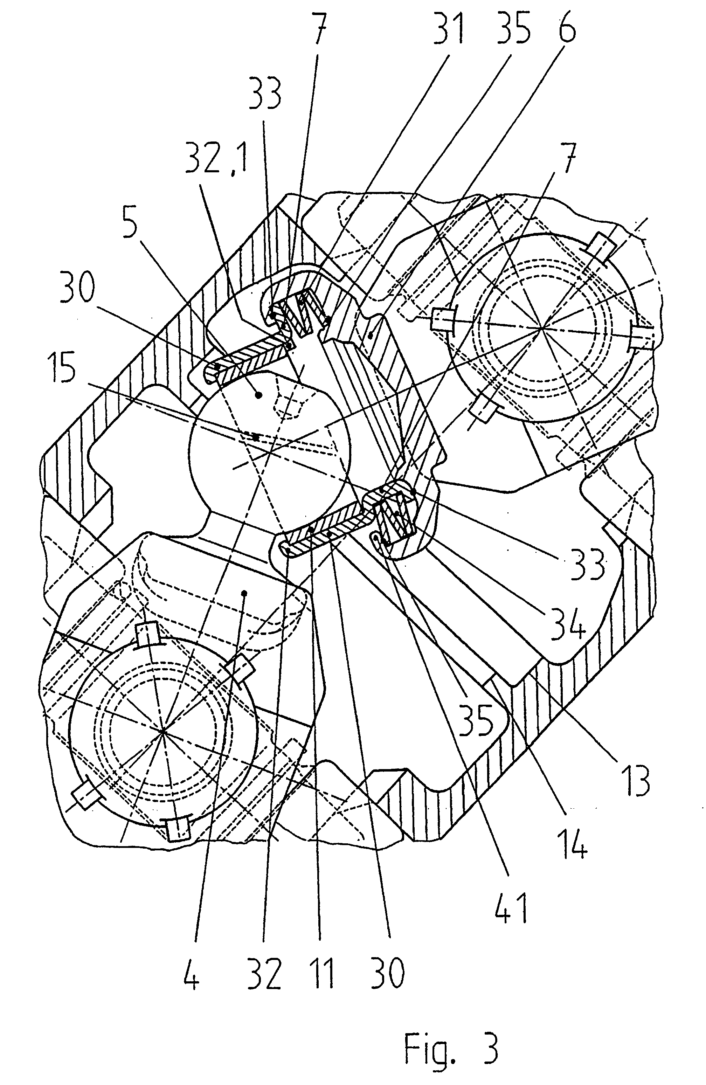

Die Gleitbüchse 11, welche in der Figur 3 im Querschnitt dargestellt ist, wird vorteilhafterweise in ihrer Längsachse durch einen Schlitz 15 unterbrochen, so dass die Büchse 11 radial atmen kann und vorgespannt auf die Kugel 5 angepasst werden kann. Dadurch wird erreicht, dass die Büchse 11 spielfrei auf der Kugel 5 dreht und/oder gleitet. Der Schlitz 15 kann sowohl in Längsrichtung zur Achse oder spiralförmig angelegt werden oder auch auf andere Art, welche die Wandung unterbricht.
Eine weitere Möglichkeit den Federweg der Büchse 11 zu vergrössern, bzw. eine zusätzliche Dämpfung vorzusehen, besteht darin, neben der Taumellagerung an der Gabel 6, zwischen der Büchse 11 und der Aufnahme 7 ein gummielastisches Material anzubringen.
In Figur 3 ist dargestellt wie die Aufnahme 7 als Taumelhülse 7 mit Federn 31 eingespannt an der Gabel gelagert werden können. Wegen der hohen aufzubringenden Vorspannkraft und dem geringen erforderlichen Bauraum sind Tellerfedern bevorzugt.

Sie ermöglichen ausserdem kostengünstige Lösungen. Eine weitere geeignete federnde Lagerung ist möglich unter Einsatz von gummielastischen Kissen, die z.B. ringscheibenförmig, eingespannt zwischen Metallscheiben angeordnet werden können. Dies kann nach Bedarf auch in einer mehrlagigen Ausführung erfolgen.
Aus der Figur 3 ist weiter ersichtlich, dass die Tellerfedern 31 mit Vorteil in einem Ringförmigen Hohlraum 34 untergebracht sind welcher am Gabelende 6 ausgebildet ist. In der oberen Schnitthälfte der Figur ist die Taumelführung 7,30 mit einem Bord 33 versehen welches als Federanschlag dient und gegen ein weiteres Bord 41, das als Haltelippe bzw. Kralle ausgebildet ist, gedrückt wird und so in Ruheposition axial zur wellenachse ausgerichtet ist. Die Haltekralle 41 hält die Gleitlager ausserdem in axialer Position.
Im der unteren Hälfte ist eine weitere Variante der Taumelhülsenlagerung dargestellt, wobei hier die Taumelhülse 30 durch die Federn 31 über ein an der Hülse 7 ausgebildetes Anschlagbord 33 gegen den gabelseitigen Anschlag 35 gedrückt wird. Die Federn 31 werden dabei an der, den Hohlraum 34 bildenden Auskragung 41 bzw. Haltelippe abgestützt, wobei sie zur Montage an der Aufnahme 7 gehalten werden. Die Büchse 11 kann durch kalibrieren in der Taumelhülse 7 spielfrei sein.Die Büchse 11 wird vorteilhafterweise mit Haltemitteln 32, 32,2 an der Taumelaufnahme 7 fixiert. Mit Vorteil erfolgt dies über Bördel 32, mindestens an der Gabel 6 abgewandten Seite der Büchse 11. Die Kröpfung des Bördels 32 sollte die Büchse 11 mindestens soweit übergreifen, dass diese bei entsprechender Abnutzung und somit auftretendem Spiel nicht herausfällt. Am anderen Ende der Büchse 11 kann an der Taumelführung 30 eine Haltenase 32,1 vorgesehen weden welche die Büchse 11 auch in die andere axiale Richtung fixiert.

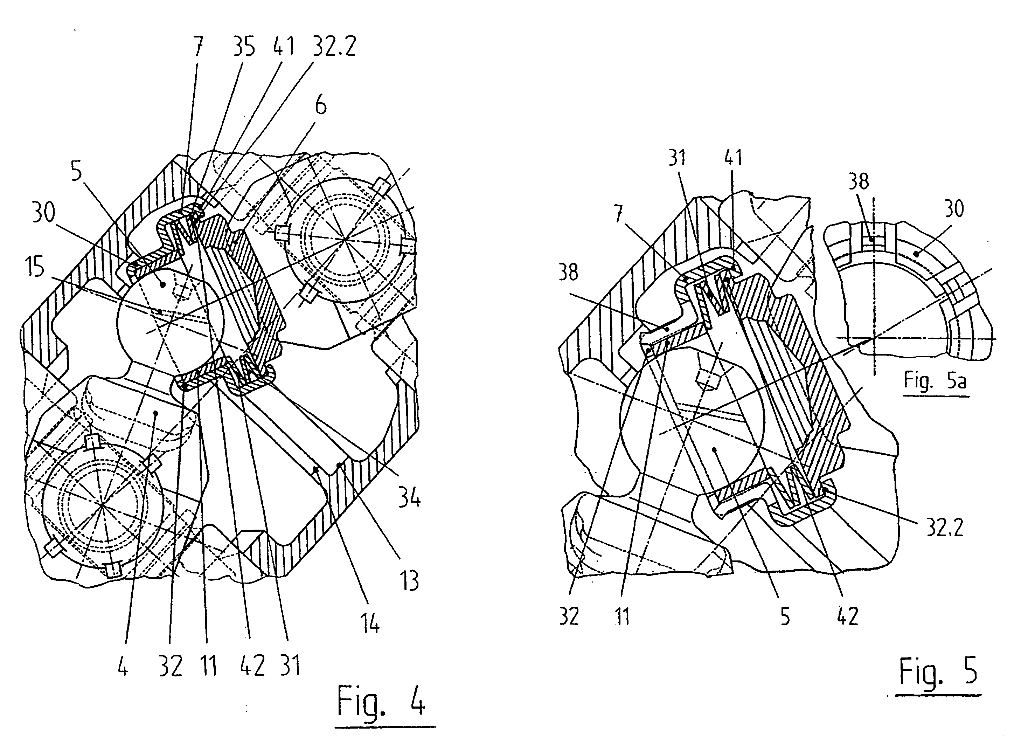

Weitere Möglichkeiten der Lagerung sind in Figur 4 dargestellt. In der oberen Figuren hälfte greift eine Bördelung 32,2 auf die Kugelabgewandte Seite einer Auskragung 42 an der Gabel 6. Zwischen der Frontseite der Auskragung 42 und einer einen ringförmigen Hohlraum 34 bildenden Bördelung der Gleitlagerbuchse 11 sind die Federn 31 eingespannt.

Gemäss Darstellung in den Figuren 5 und 5a kann die Gleithülse 11 auch zusätzlich, elastisch mit Federfingern 38 gehalten werden, wobei diese an der Taumelhülse 30 angebracht oder ausgebildet sind. Dies ergibt einen zusätzlichen Toleranzausgleich.

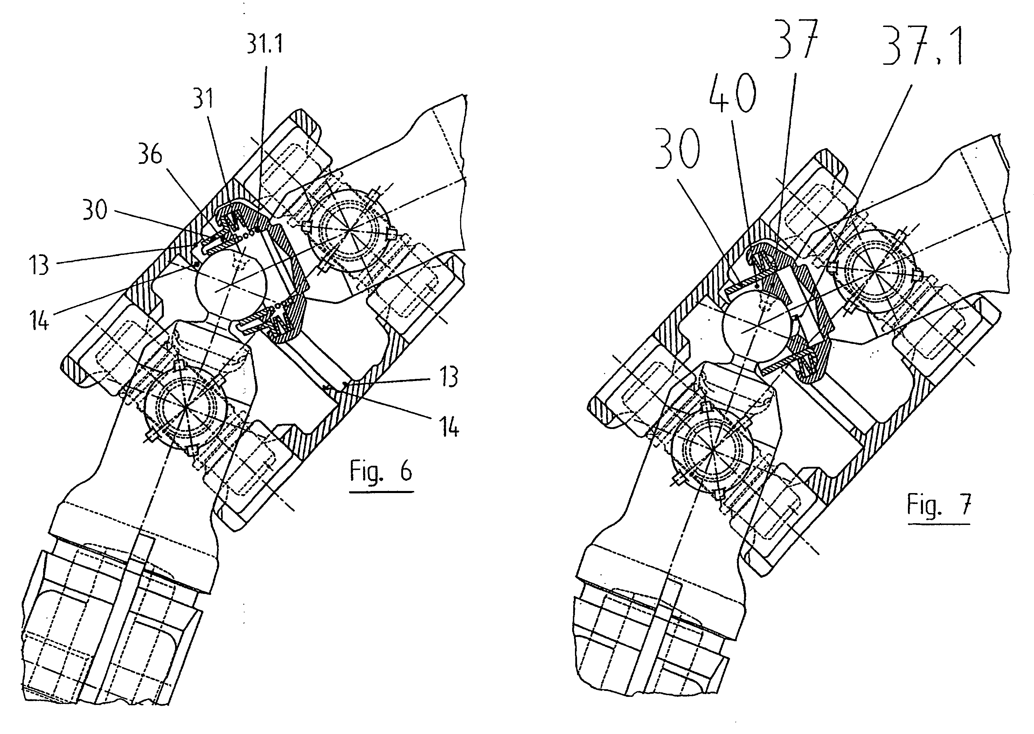

Die Verwendung einer, vorzugsweise zustellenden, Kunststoffhülse 36 zwischen der Büchse 11 und der Taumelführung,gemäss Figur 6, ermöglicht zusätzlich das Lagerspiel gegen null zu halten bei Kompensation von Verschleiss und vereinfacht die Montage. Die Kegelförmige Ausbildung der Kunststoffhülse 36 und der Taumelführung 7,30 verbessert die Einstellung auf Spielfreiheit zusätzlich. Die Kunststoffhülse kann in geeigneter Weise geformt werden, vorzugsweise konisch und ebenfalls geschlitzt werden, dass die Büchse 11 fixiert ist, beispielsweise mit Nasen welche die Büchse 11 an deren Ende übergreifen. Günstig ist wenn eine Feder 31,1 den Konus zustellend andrückt. Geeignet als Kunststoff ist vor allem POM, aber auch PA, PA und GF.

Eine weitere Möglichkeit die Lagerung zu vereinfachen besteht, entsprechend der Darstellung nach Figur 7, darin die metallische Gleitbüchse 11 wegzulassen und auf der Kugel eine drehbewegliche Kunststoffgleitführung 37 vorzusehen welche in der Taumelführung 30,7 in axialer Richtung gleitbeweglich gelagert ist. Ein weiterer kleiner Spielausgleich kann über Federlippen erfolgen, die im abgewinkelten Gelenk mit Druck an der Kugeloberfläche reiben und die Kunststoffgleitführung 37 im Spiel achsial versetzen.

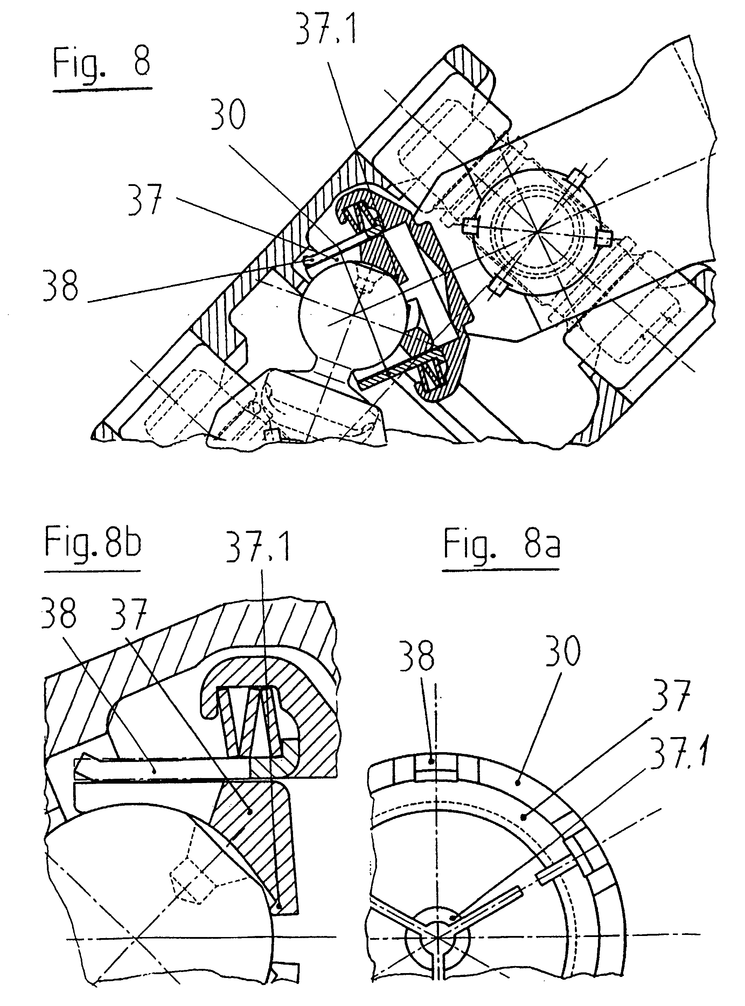

Gemäss Darstellung nach den Figuren 8, 8a und 8b kann die Anordnung weiter verbessert werden, indem die zylinderförmige Taumelführung 7,30 in ihrem Wandbereich federelastisch ausgebildet wird und die Kunststoffgleitführung 37 federelastisch, spielfrei umschliesst und bei Verschleiss sogar nachstellt. Dies ist einfach realisierbar durch entsprechende Materialwahl und anbringen von Schlitzen welche die Wand in Teilbereichen unterbrechen und somi elastische Federfinger 38 ausbilden. Diese Ausführung ist besonders kostengünstig realisierbar und ermöglicht eine einfache Montage des Gelenkes. Weitere Vorteile sind die grossflächige Auflage der Kugel und dadurch weniger Abnutzung, gute Dämpfung gegenüber Schlägen und die grosse Auswahl von geeigneten Werkstoffen wie POM, PA, PA + GF, sowie Kunststoff-Kohlefaserverbund Werkstoffe welche besonders günstiges Schmierverhalten aufweisen. POM ist hierbei besonders geignet und kostengünstig. Zusätzlich können Schlitze im zentralen Bereich der Gleitführung 37 als Federlippen 37,1 ausgebildet werden, um die Kugel 5 mit noch weniger Spiel federelastisch zu umschliessen.

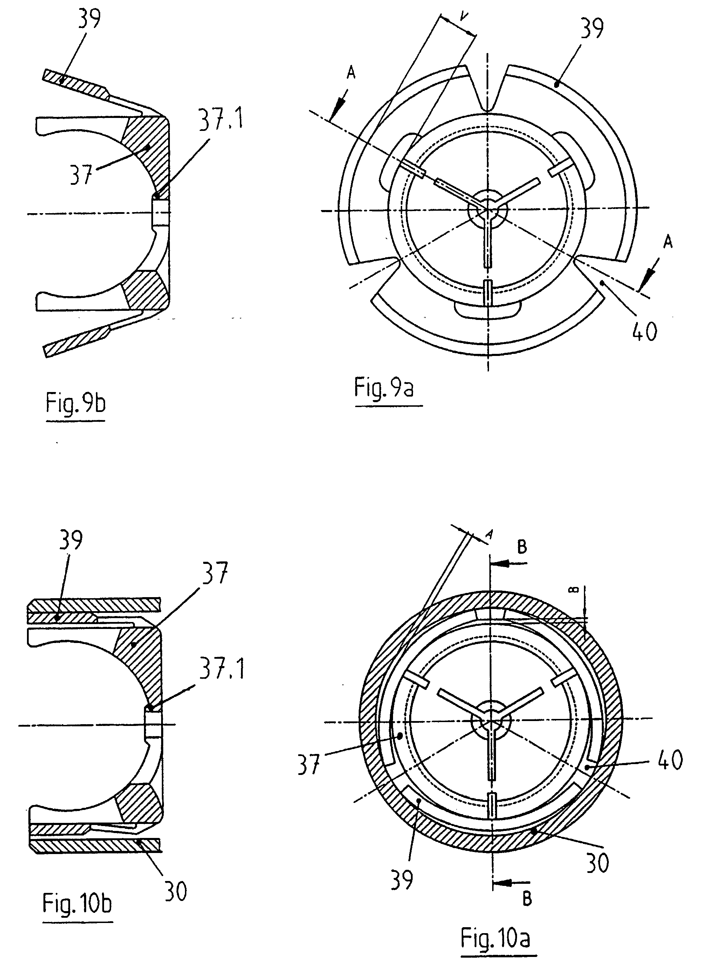

Die Variante in Figuren 9b und 9a zeigen im Längs- und Querschnitt eine weitere bevorzugte Möglichkeit für den dämpfenden Spielausgleich im ungespannten Zustand. Die in der Taumelführung 30 gleitende Kunststoffgleitführung 37 wird in ihrem Aussenwandbereich mit einer Kunststoffeder 39 versehen, welche unter Vorspannung V ein spielfreies Gleiten ermöglicht. Die Feder 39 ist vorzugsweise mit der Kunststofführung 37 aus einem Stück hergestellt, wobei die Feder vorzugsweise so geschlitzt 40 ist, dass sie radial atmen und sich verschleiss- und toleranzausgleichend an der Innenfläche der Taumelführung 30 anlegt. In Figur 10 wird dieselbe Kunststoffgleitführung gemäss Figur 9, in eingebautem Zustand gezeigt. Die Toleranzspalte A,B, welche die Feder 39 gegenüber der Taumelführung 30 überbrückt sind schematisch dargestellt.

## Patentansprüche

1. Lenkwellen doppelgelenk für Kraftfahrzeuge mit im Gelenk drehfest verbundenen Wellenenden (1, 2), wobei diese in je einem Gelenk (9), welche in einem die beiden Gelenke (9) verbindenden Gehäuse (8) beweglich gelagert sind und die Wellenenden (1, 2) zwischen den beiden Gelenken durch ein Kugelgelenk (5, 7) miteinander verbunden sind, so dass die Kugel (5) an dem einen Wellenende (2) in einer Aufnahme (7) des anderen Wellenendes (1) um ihren Mittelpunkt drehbar und in Richtung der Wellenachse (3) des anderen Wellenendes (2) gleitbeweglich und in radialer Richtung federnd gelagert ist, **dadurch gekennzeichnet, dass** die Aufnahme (7) taumelbeweglich um die Wellenachse (3) am Wellenende (2) federnd gelagert ist.

2. Gelenk nach Anspruch 1 **dadurch gekennzeichnet, dass** die Aufnahme (7) eine Gleitbüchse (11) aufnimmt.

3. Gelenk nach Anspruch 2 **dadurch gekennzeichnet, dass** die Büchse (11) von einer Taumelführung (30) gehalten wird, wobei die Büchse (11) vorzugsweise von der Taumelführung (30) mindestens teilweise umschlossen wird.

4. Gelenk nach einem der vorhergehenden Ansprüche **dadurch gekennzeichnet, dass** die Lagerung mit Metallfedern (31) vorzugsweise mit Tellerfedern (31) erfolgt.

5. Gelenk nach einem der vorhergehenden Ansprüche **dadurch gekennzeichnet, dass** die Lagerung mit Elastomer-Federkissen erfolgt, vorzugsweise mit ringförmigen Kissen zwischen Beilagscheiben.

6. Gelenk nach Anspruch 4 **dadurch gekennzeichnet, dass** die Tellerfedern (31) gegenüber der Taumelführung (30) vorgespannt sind, so dass die Wellenachse (3) in unbelasteter Stellung mit der Achse der Taumelführung (30) ausgerichtet ist.

7. Gelenk nach einem der vorhergehenden Ansprüche **dadurch gekennzeichnet, dass** die Büchse (11) aus einem Sintermetall besteht, vorzugsweise mit Traghülse oder eine Gleitbeschichtung aufweist.

8. Gelenk nach einem der vorhergehenden Anspruche **dadurch gekennzeichnet, dass** die Büchse (11) derart geschlitzt ist, dass sie in radialer Richtung federbeweglich ist.

9. Gelenk nach einem der vorhergehenden Ansprüche **dadurch gekennzeichnet, dass** die Büchse (11) in jeder Arbeitsstellung die Kugel (5) verschleiss- und toleranzausgleichend spielfrei umfasst, wobei die Büchse (11) vorzugsweise in der Taumelführung(7,30) mit Spiel gegen null kalibriert eingebaut ist.

10. Gelenk nach einem der vorhergehenden Ansprüche **dadurch gekennzeichnet, dass** zwischen dem Wellenende (2) und der Aufnahme (7) ein ringförmiger Hohlraum (34) ausgebildet ist zur Aufnahme von vorgespannten, federnden Mitteln (31), wobei diese zwischen einem ersten gabelseitigen Anschlag (35,41) und einem zweiten Anschlag (33) an der Taumelführung (30) angeordnet sind, so dass die Taumelführung (30) bei radialer Krafteinwirkung um die Wellenachse (3) federnd taumeln kann.

11. Gelenk nach einem der vorhergehenden Ansprüche **dadurch gekennzeichnet, dass** die Büchse (11) an mindestens einem Ende in axialer Richtung von der Taumelführung (30) gehalten wird, vorzugsweise durch einen Bördel (32) oder durch Krallen (32,1).

12. Gelenk nach einem der vorhergehenden Ansprüche **dadurch gekennzeichnet, dass** zwischen der Gleitbüchse (11) und der Taumelführung (30) eine Kunsstoffhülse (36), vorzugsweise geschlitzt und konisch und vorzugsweise aus POM, vorgesehen ist und diese vorzugsweise mit einer Feder 31,1 zustellend unter Druck ist.

13. Gelenk nach einem der vorhergehenden Ansprüche **dadurch gekennzeichnet, dass** zwischen der büchsenförmigen Aufnahme (7) und der Kugel (5) eine Kunststoffgleitführung (37) vorgesehen ist derart, dass sie die Kugel (5) drehbeweglich aufnimmt und von der Aufnahme (7) in axialer Richtung gleitbeweglich geführt wird, wobei die Führung (37) vorzugsweise direkt auf die Kugel (5) aufgespritzt ist.

14. Gelenk nach Anspruch 13 **dadurch gekennzeichnet, dass** die Aufnahme (7) auf ihrem umfang federfingerartige Mittel aufweist und die Kunsstoffgleitführung (37) zwischen Kugel (5) und Aufnahme (7) federnd einspannt.

15. Gelenk nach Anspruch 13 oder 14 **dadurch gekennzeichnet, dass** die Kunsstoffgleitführung (37) im Aussenwandbereich von einer vorgespannten Kunststoffeder (39) umschlossen wird welche in der Aufnahme (7,30) gleitet, wobei diese Feder (39) vorzugsweise auf deren umfang Schlitze (40) aufweist, so dass sie in radialer Richtung atmen kann.

16. Gelenk nach einem der vorhergehenden Ansprüche **dadurch gekennzeichnet, dass** an der inneren Wand des Gehäuses (8) Anschlagmittel (13, 14) für die Kugel (5) und die Aufnahme (7) vorgesehen sind.

17. Gelenk nach Anspruch 16 **dadurch gekennzeichnet, dass** die Anschlagmittel (13, 14) so ausgebildet sind, dass die Kugel (5) und die Aufnahme (7) in allen Gelenkextremauslenkungen und im Montagefall die vorgegebenen zulässigen Positionen definieren, wobei die Mittel (13, 14) so ausgebildet sind, dass im Anschlagfall zuerst die Aufnahme (7) und danach die Kugel (5) kontaktiert.

18. Gelenk nach einem der vorhergehenden Ansprüche **dadurch gekennzeichnet, dass** das Doppelgelenk ein homokinetisches Gelenk, wie ein Gleichlauf-Festgelenk enthält und/oder vorzugsweise ein Kreuzgelenk.

## Claims

1. Double steering column joint for motor vehicles with shaft ends (1, 2) connected rotationally fixed in the joint, where said ends each in a joint (9) are mounted mobile in a housing (8) connecting the two joints (9) and the shaft ends (1, 2) are connected together between the two joints by a ball joint (5, 7) so that the ball (5) at the one shaft end (2) is mounted rotatable about its centre point in a holder (7) of the other shaft end (1) and mobile sliding in the direction of the shaft axis (3) of the other shaft end (2) and sprung in the radial direction, **characterised in that** the holder (7) is spring-mounted at the shaft end (2) and mobile with a tumbling motion about the shaft axis (3).

2. Joint according to claim 1, **characterised in that** the holder (7) holds a slip bush (11).

3. Joint according to claim 2, **characterised in that** the bush (11) is held by a tumble guide (30), where the bush (11) is surrounded at least partially preferably by the tumble guide (30).

4. Joint according to any of the previous claims, **characterised in that** the mounting with metal springs (31) preferably takes place with plate springs (31).

5. Joint according to any of the previous claims, **characterised in that** the mounting takes place with elastomer spring cushions, preferably with annular cushions between shims.

6. Joint according to claim 4, **characterised in that** the plate springs (31) are pretensioned against the tumble guide (30) so that the shaft axis (3) in the unladen position is aligned with the axis of the tumble guide (30).

7. Joint according to any of the previous claims, **characterised in** the bush (11) consists of a sintered metal, preferably with a carrier sleeve or a slip coating.

8. Joint according to any of the previous claims, **characterised in that** the bush (11) is slotted such that is spring-mobile in the radial direction.

9. Joint according to any of the previous claims, **characterised in that** the bush (11) in each working position surrounds the ball (5) play-free with compensation for wear and tolerance, where the bush (11) is integrated preferably in the tumble guide (7, 30) with play calibrated towards zero.

10. Joint according to any of the previous claims, **characterised in that** between the shaft end (2) and the holder (7) is formed an annular cavity (34) to hold pretensioned spring means (31), where these are arranged between a first fork-side stop (35, 41) and a second stop (33) on the tumble guide (30), so that the tumble guide (30) can spring-tumble about the shaft axis (3) under radial force application.

11. Joint according to any of the previous claims, **characterised in that** the bush (11) is held at least at one end in the axial direction by the tumble guide (30), preferably by a flange (32) or a collar (32, 1).

12. Joint according to any of the previous claims, **characterised in that** between the slide bush (11) and the tumble guide (30) is provided a plastic sleeve (36), preferably slotted and conical and preferably made of POM, and this preferably is under pressure applied by a spring 31.1.

13. Joint according to any of the previous claims, **characterised in that** between the bush-like holder (7) and the ball (5) is provided a plastic slip guide (37) such that the ball (5) is held radially mobile and is guided mobile sliding in the axial direction by the holder (7), where the guide (37) is preferably spray-moulded directly onto the ball (5).

14. Joint according to claim 13, **characterised in that** the holder (7) has on its periphery spring finger-like means and the plastic slip guide (37) is spring-clamped between the ball (5) and the holder (7).

15. Joint according to claim 13 or 14, **characterised in that** the plastic slip guide (37) in the outer wall area is surrounded by a pretensioned plastic spring (39) with slides in the holder (7, 30), where this spring (39) preferably has on its periphery slots (40) so that it can breathe in the radial direction.

16. Joint according to any of the previous claims, **characterised in that** on the inner wall of the housing (8) are provided stop means (13, 14) for the ball (5) and the holder (7).

17. Joint according to claim 16, **characterised in that** the stop means (13, 14) are formed so that the ball (5) and the holder (7) define the prespecified permissible positions in all extreme joint deflections and in the assembly case, where the means (13, 14) are designed so that in the stop case they contact first the holder (7) and then the ball (5).

18. Joint according to any of the previous claims, **characterised in that** the double joint contains a homokinetic joint such as a homokinetic fixed joint and/or preferably a universal joint.

## Revendications

1. Joint de cardan double pour arbres de direction dans des véhicules automobiles, avec des extrémités d'arbre (1, 2) reliées de manière non-rotative dans le joint de cardan, ces extrémités étant montées mobiles chacune dans un boîtier (8) reliant les deux joints de cardan (9) et les extrémités d'arbre (1, 2) étant reliées entre elles, entre les deux joints de cardan, par une articulation à rotule (5, 7), de sorte que la rotule (5) située sur la première extrémité d'arbre (2) est montée rotative autour de son centre dans un logement (7) de l'autre extrémité d'arbre (1), qu'elle est montée de manière coulissante dans la direction de l'axe d'arbre (3) de l'autre extrémité d'arbre (2), et qu'elle est montée sur ressort dans la direction radiale, **caractérisé en ce que** le logement (7) est monté sur ressort avec un mouvement de nutation autour de l'axe d'arbre (3) à l'extrémité (2) de l'arbre.

2. Joint de cardan suivant la revendication 1, **caractérisé en ce que** le logement (7) contient une douille de glissement (11).

3. Joint de cardan suivant la revendication 2, **caractérisé en ce que** la douille (11) est tenue par un guide en nutation (30), la douille (11) étant de préférence entourée au moins partiellement par le guide en nutation (30).

4. Joint de cardan suivant l'une quelconque des revendications précédentes, **caractérisé en ce que** le montage s'effectue avec des ressorts métalliques (31), de préférence avec des ressorts à rondelles Belleville (31).

5. Joint de cardan suivant l'une quelconque des revendications précédentes, **caractérisé en ce que** le montage s'effectue avec des amortisseurs en élastomère, de préférence avec des amortisseurs de forme annulaire placés entre des rondelles.

6. Joint de cardan suivant la revendication 4, **caractérisé en ce que** les ressorts à rondelles Belleville (31) sont montés sous tension préalable par rapport au guide en nutation (30) de sorte que, dans la position de repos, l'axe d'arbre (3) est aligné avec l'axe du guide en nutation (30).

7. Joint de cardan suivant l'une quelconque des revendications précédentes, **caractérisé en ce que** la douille (11) est composée d'un métal fritté, de préférence avec une douille support, ou présente un revêtement glissant.

8. Joint de cardan suivant l'une quelconque des revendications précédentes, **caractérisé en ce que** la douille (11) est fendue de manière à être mobile élastiquement dans la direction radiale.

9. Joint de cardan suivant l'une quelconque des revendications précédentes, **caractérisé en ce que**, dans chaque position de travail, la douille (11) entoure la rotule (5) sans jeu en compensant l'usure et les tolérances, la douille (11) étant insérée dans le guide en nutation (7, 30) de manière calibrée avec un jeu nul.

10. Joint de cardan suivant l'une quelconque des revendications précédentes, **caractérisé en ce qu'**entre l'extrémité d'arbre (2) et le logement (7) est ménagée une cavité annulaire (34) destinée à recevoir des moyens à ressort précontraints (31), ceux-ci étant placés entre une première butée (35, 41) côté fourchette et une deuxième butée (33) sur le guide en nutation (30), de sorte que le guide en nutation (30) peut exécuter une nutation de manière élastique autour de l'axe d'arbre (3) en cas d'application radiale d'une force.

11. Joint de cardan suivant l'une quelconque des revendications précédentes, **caractérisé en ce que** la douille (11) est maintenue à au moins une extrémité dans la direction axiale par le guide en nutation (30), de préférence par un bourrelet (32) ou des griffes (32,1).

12. Joint de cardan suivant l'une quelconque des revendications précédentes, **caractérisé en ce qu'**entre la douille de glissement (11) et le guide en nutation (30), il est prévu une douille en matière plastique (36), de préférence fendue et conique et de préférence en POM, et que celle-ci est de préférence compressée par un ressort (31,1).

13. Joint de cardan suivant l'une quelconque des revendications précédentes, **caractérisé en ce qu'**entre le logement (7) en forme de douille et la bille (5), il est prévu un guide à glissière en matière plastique (37), de telle manière qu'il reçoit de manière rotative la rotule (5) et qu'il est guidé en coulissement dans la direction axiale par le logement (7), le guide (37) étant de préférence projeté directement sur la rotule (5).

14. Joint de cardan suivant la revendication 13, **caractérisé en ce que** le logement (7) présente sur sa circonférence des moyens en forme de doigts élastiques et enserre élastiquement le guide à glissière en matière plastique (37) entre la rotule (5) et le logement (7).

15. Joint de cardan suivant les revendications 13 ou 14, **caractérisé en ce que** le guide à glissière en matière plastique (37) est entouré dans la zone de paroi extérieure par un ressort précontraint (39) en matière plastique, qui coulisse dans le logement (7, 30), ce ressort (39) présentant de préférence des fentes (40) sur sa circonférence, de sorte qu'il peut se dilater dans la direction radiale.

16. Joint de cardan suivant l'une quelconque des revendications précédentes, **caractérisé en ce que** des moyens de butée (13, 14) sont prévus sur la paroi intérieure du boîtier (8) pour la rotule (5) et le logement (7).

17. Joint de cardan suivant la revendication 16, **caractérisé en ce que** les moyens de butée (13, 14) sont conformés de telle manière que la rotule (5) et le logement (7) définissent dans toutes les positions extrêmes de déviation du joint de cardan, et dans la situation de montage, les positions prédéterminées admissibles, les moyens (13, 14) étant conformés de telle manière qu'en cas de butée, ils viennent en contact d'abord avec le logement (7) puis avec la rotule (5).

18. Joint de cardan suivant l'une quelconque des revendications précédentes, **caractérisé en ce que** le double joint de cardan contient un joint de cardan homocinétique, comme un joint de cardan fixe synchronisé et/ou de préférence un joint de cardan à croisillon.
